# FASCICULE DE BREVET EUROPEEN

(11) **EP 2 686 259 B1**
(45) Date de publication et mention de la délivrance du brevet: **22.11.2017**
(21) Numéro de dépôt: 12709102.3
(22) Date de dépôt: 16.03.2012
(51) Int. Cl.: B65G 47/84, B29C 49/42

(54) **DISPOSITIF DE TRANSFERT COMPORTANT UNE PINCE DE PREHENSION**
ÜBERTRAGUNGSVORRICHTUNG MIT EINEM GREIFER
TRANSFER DEVICE COMPRISING A GRIPPER

(30) Priorité: 17.03.2011 FR 1152176
(43) Date de publication de la demande: 22.01.2014
(73) Titulaire: Sidel Participations, 76930 Octeville-sur-Mer (FR)
(72) Inventeur: ROUSSEAU, Nicolas, F-76930 Octeville Sur Mer (FR); MICHEL, Jocelyn, F-76930 Octeville Sur Mer (FR)
(74) Mandataire: Grassin d'Alphonse, Emmanuel Jean Marie
(86) Numéro de dépôt international: PCT/EP2012/054646
(87) Numéro de publication internationale: WO 2012/123566

(56) Documents cités:
- EP-A1- 2 159 172
- EP-A1- 2 248 759
- WO-A1-2011/015371
- US-A1- 2010 077 703

## Description

La présente invention concerne un ensemble comportant un dispositif de transfert comportant une pince de préhension et un objet à transférer. La présente invention concerne plus particulièrement un ensemble selon le préambule de la revendication 1. On connaît de l'état de la technique des dispositifs de transfert de ce type qui comportent généralement un support tournant qui est entraîné en rotation de manière continue autour d'un axe de rotation vertical.

Le support tournant d'un tel dispositif de transfert porte au moins un bras de transfert qui comporte, à l'une libre de ses extrémités, au moins un élément de support ou une pince de préhension qui est apte à saisir un objet comportant un goulot et pourvu d'une collerette radiale, en particulier une préforme ou un récipient.

De tels dispositifs de transfert sont utilisés dans les installations de fabrication de récipients, notamment de fabrication de bouteilles, de flacons, etc. formant des corps creux.

Ces récipients sont fabriqués à partir de préformes ou d'ébauches obtenues par injection de matière plastique, notamment de polyéthylène téréphtalate (PET), qui sont ensuite conditionnées thermiquement dans un four avant d'être transformées en récipients dans un moule.

Une telle préforme comporte un goulot qui présente sa forme définitive, c'est-à-dire celle du goulot du récipient final obtenu à l'issue de l'opération de transformation et c'est la raison pour laquelle seul le corps de la préforme est chauffé lors du conditionnement thermique dans le four.

En effet, le goulot doit être préservé de la chaleur et est généralement refroidi au moins par un flux d'air afin d'éviter toute déformation qui soit notamment de nature à compromettre l'opération ultérieure de fermeture du récipient, par exemple au moyen d'un bouchon à vis.

Le procédé de formage de la préforme chaude dans le moule aux fins d'obtenir un récipient est réalisé au moyen d'un fluide sous pression dans une machine de l'installation de fabrication. Le formage ou façonnage y est généralement réalisé par soufflage ou par étirage-soufflage de la préforme au moyen d'un gaz sous pression ou encore au moins en partie par remplissage au moyen d'un liquide sous pression.

On connaît des machines de transformation de préformes en récipients de ce genre, en particulier des machines de soufflage (ou d'étirage-soufflage) dans lesquelles on distingue habituellement, de part leur conception, les machines de type "linéaire" et "rotatif" respectivement.

A titre d'exemples non limitatifs, on pourra se reporter pour de plus amples détails aux documents indiqués ci-après pour illustrer de telles machines selon l'une et l'autre des conceptions.

Le document WO-2008/132090 décrit un dispositif de transfert pour une machine de conception linéaire tandis que le document WO-2005/095238 décrit un dispositif de transfert pour une machine rotative comportant un carrousel pourvu circonférentiellement d'une pluralité de postes de moulage.

Dans une installation de fabrication de récipients, des dispositifs de transfert ou de convoyage sont ainsi mis en oeuvre pour réaliser successivement les différentes opérations de transport qui jalonnent les étapes du procédé de fabrication.

Dans le four, les préformes sont convoyées par un dispositif de transport comportant généralement au moins un organe, tel qu'une chaîne ou une courroie, entraîné en boucle suivant un parcours de chauffe déterminé et des moyens de support des préformes qui sont liés en déplacement audit organe d'entraînement.

Le document WO-00/48819 décrit et représente un exemple de tels moyens de support ou préhension des préformes dans un four, lesdits moyens sont introduits par l'ouverture et pénètrent à l'intérieur du goulot de la préforme.

Des moyens de support de ce type, encore appelés "tournettes" du fait qu'ils assurent de préférence la mise en rotation sur elle-même de la préforme, laissant l'extérieur du goulot, et tout particulièrement la collerette, libre d'être saisi par d'autres moyens chargement/ déchargement pour réaliser le dévêtissage des préformes, et procéder à leur transfert.

Le document EP-1.922.273 décrit un exemple de tels moyens de chargement/déchargement aptes à procéder au dévêtissage de préformes en sortie du four et à leur transfert pour un transport vers l'aval.

En effet, l'opération de transport suivante consiste à transférer successivement, généralement une par une, les préformes "chaudes" conditionnées thermiquement depuis la sortie du four jusqu'au moule de la machine afin de les y transformer en récipients selon l'un des procédés de formage précités.

Selon l'état de la technique, pour assurer le transfert de la préforme chaude depuis la sortie du four jusqu'au moule, il est notamment connu d'utiliser un dispositif de transfert comportant au moins une pince de préhension dont les mors sont aptes à saisir sélectivement la préforme, en la tenant par l'extérieur du goulot.

La pince de préhension est généralement montée solidaire de l'extrémité libre d'un bras de transfert, le bras de transfert étant porté par un support monté mobile en rotation autour d'un axe de rotation vertical du dispositif pour effectuer le convoyage de la préforme depuis la sortie du four jusqu'au moule de la machine, le tout en parfaite synchronisation avec le dispositif de transport du four en amont et la machine en aval.

On connaît donc de l'état de la technique des dispositifs de transfert comportant une pluralité de bras de transfert munis de pince et répartis circonférentiellement autour de l'axe de rotation.

Les bras de transfert sont parfois articulés, à tout le moins télescopiques, c'est-à-dire montés mobiles en translation selon la direction radiale entre au moins une position déployée dans laquelle la préforme est saisie ou libérée et une position rétractée dans laquelle est réalisé le transfert de la préforme.

Les bras de transfert des dispositifs de transfert sont parfois aptes à assurer également, lors du parcours de transfert, une fonction dite de variation de pas.

La fonction consiste à faire varier, au cours du transfert de la préforme, l'écartement entre deux bras de transfert consécutifs de manière à faire varier le pas entre deux objets consécutifs, notamment d'un premier pas, correspondant à l'écartement initial entre deux préformes successives en sortie du four tel que déterminé par le dispositif de transport de ce dernier, à un deuxième pas correspondant à l'écartement final nécessaire entre deux préformes successives pour alimenter la machine.

Le deuxième pas est par exemple déterminé par l'écartement entre deux moules consécutifs sur une machine de type rotatif ou deux cavités de moulage d'un même moule sur une machine linéaire.

Les machines de type rotatif sont toutefois dominantes en raison notamment des cadences de fabrication de récipients atteintes qui sont généralement supérieures à celles des machines de type linéaire. C'est donc tout particulièrement pour fonctionner avec une telle machine de type rotatif que l'état de la technique des dispositifs de transfert est décrit ci-après.

Les bras du dispositif de transfert, munis chacun d'au moins une pince de préhension, sont aptes à assurer directement ou non la préhension de la préforme en sortie de four.

Un dispositif intermédiaire, tel que les moyens de chargement/déchargement précités ou encore une roue de transfert à encoches, peut le cas échéant être interposé entre le dispositif de transport du four et ledit dispositif de transfert.

Une telle roue de transfert comporte généralement un plateau tournant entraîné en rotation autour d'un axe vertical qui comporte circonférentiellement des encoches globalement en forme de "U" ou de "V" dans lesquelles sont introduites les préformes libérées des moyens de support du dispositif de transport du four.

Dans une roue de transfert à encoches, chaque préforme est supportée par l'intermédiaire de sa collerette radiale qui est en appui sur le pourtour de l'encoche, la préforme étant orientée verticalement avec le goulot en haut.

Les autres moyens de chargement/déchargement précités, notamment en référence au document EP-1.922.273, se distinguent d'une telle roue à encoches par le fait de comporter des pinces de préhension aptes à saisir les préformes de part et d'autre de leur collerette.

Le document EP 2 248 759 A1 divulgue un ensemble selon le préambule de la revendication 1. Selon une caractéristique importante, une préforme n'est jamais saisie ou serrée sur le corps, tout particulièrement si la préforme est chaude, et cela afin d'éviter de marquer de manière indésirable la préforme. En effet, lorsque la préforme a été chauffée dans le four en vue de son formage, la préforme est ramollie et par conséquent sensible à tout contact.

On évite également et surtout d'opérer alors un transfert thermique de la préforme vers la pince, un tel transfert thermique étant susceptible d'affecter l'opération de transformation ultérieure de la préforme en récipient.

En effet, il est constant dans l'état de la technique de ne jamais effectuer la préhension du tronçon de jonction des préformes situé sous la collerette radiale de la préforme et ceci afin de ne pas y laisser des marques, notamment du fait de l'effort de serrage appliqué par les mors d'une pince.

De plus, en l'absence de tout contact direct, il n'y a alors pas de transfert thermique (encore appelé "points froids") susceptible de s'opérer par conduction entre le tronçon de jonction et les moyens de transfert, étant observé qu'un tel contact provoquerait un refroidissement de cette zone propre à affecter ensuite l'allongement de la matière lors du formage du récipient dans le moule pour lequel la maîtrise de la température est un des paramètres essentiels.

Ainsi, les mors de la pince de préhension dans les dispositifs de transfert selon l'état de la technique se positionnent toujours autour du goulot et c'est la raison pour laquelle les moyens de support du four ou moyens intermédiaires doivent laisser le goulot libre de pouvoir être saisi.

En particulier, la gorge annulaire du goulot destinée à la bague de sécurité constitue généralement la partie du goulot choisie pour être saisie par les mors de la pince.

Il est donc constant pour l'homme du métier que les mors de la pince de préhension doivent se positionner axialement entre la collerette radiale et le buvant du goulot, et jamais sur le corps de la préforme.

Dans les solutions connues précitées, les préformes sont ainsi soit supportées, soit tenues par leur collerette sans qu'il n'y ait jamais de contact avec le corps de la préforme.

Lorsque le goulot comporte un filetage pour permettre la fermeture ultérieure du récipient par un bouchon à vis, il est encore généralement pourvu d'une gorge annulaire qui, délimitée axialement par la collerette et un bourrelet, est destinée à recevoir ultérieurement une bague de sécurité liée de manière sécable au bouchon afin de garantir au consommateur l'intégrité du récipient (bouteilles, flacons, ...) lors de son achat.

Les mors de la pince de préhension sont alors positionnés, autour du goulot, axialement dans la gorge annulaire destinée à la bague de sécurité, car la portion filetée du goulot ne permet pas d'assurer une saisie sûre de la préforme et cela est également vrai pour un récipient à goulot fileté.

Une fois la préforme chaude saisie directement ou non par les mors de la pince, la préforme est alors transférée par le bras portant la pince qui pivote autour de l'axe de rotation jusqu'à amener la préforme dans une position donnée par rapport au moule de la machine occupant une position d'ouverture et, une fois la préforme en position, les deux coquilles du moule sont alors déplacées vers une position de fermeture.

En position de fermeture du moule, la préforme s'étend axialement à travers un orifice central du moule, le corps de la préforme s'étendant à l'intérieur du moule, dans une cavité de moulage délimitée par les faces internes des coquilles pourvues des empreintes de moulage du récipient, tandis que le goulot de la préforme fait lui sailli à l'extérieur du moule.

Plus précisément, la préforme est en appui par sa collerette radiale sur une portion de la face plane du moule entourant ledit orifice central traversé axialement de part et d'autre par la préforme. Le fluide sous pression est alors à même d'être introduit dans l'ouverture de la préforme qui est délimitée circonférentiellement par le buvant du goulot, et cela par l'intermédiaire d'une tuyère destinée à venir coiffer ledit goulot et à prendre appui avec étanchéité contre ladite face plane formée par la réunion des coquilles du moule.

On comprendra que, là encore, il est d'importance que les mors de la pince de préhension soient positionnés axialement entre la collerette radiale et le buvant du goulot, en particulier dans la gorge annulaire, à défaut la pince ne serait pas en mesure de transférer la préforme dans le moule sans que ne se produise d'interférence entre la pince et le moule lors de la fermeture de ce dernier.

Dans l'état de la technique, le dispositif de transfert est généralement distinct et agencé à proximité de la machine dont les moules sont commandés en ouverture/fermeture de manière synchrone pour permettre la mise en place de la ou des préformes.

Toutefois, le dispositif de transfert et les variantes de réalisation qui viennent d'être décrites au titre de l'état de la technique ne donnent aujourd'hui plus entière satisfaction.

Plus précisément et tel que cela est notamment expliqué dans le document WO-2008/139088 au nom de la Demanderesse, la recherche d'une réduction des coûts de production a conduit à réduire toujours plus encore la masse des préformes.

L'une des conséquences de cette réduction de la masse des préformes est que les préformes chauffées se positionnent parfois mal dans les moules de la machine, conduisant ensuite à l'obtention de récipients non-conformes qui doivent être mis au rebut pour destruction.

Tel est particulièrement le cas avec des préformes présentant par exemple un corps de très faible dimension selon la direction axiale, notamment en comparaison des dimensions du goulot présentant toujours sa forme définitive, tant et si bien que par analogie de telles préformes sont encore parfois appelées "tétines".

Pour résoudre ces problèmes, la demanderesse a proposé une solution dans le document WO-2008/139088, document auquel on se reportera pour de plus amples détails.

Conformément aux enseignements de ce document, la solution met en oeuvre une pince de manipulation qui, associée au poste de moulage de la machine auquel la pince est liée en déplacement, est apte à se déplacer entre une position relevée et une position abaissée pour tenir au moyen de ses mâchoires la préforme (ou ébauche) afin de garantir la position de la préforme par rapport au moule, en particulier la bonne coaxialité, ceci avant et jusqu'à ce qu'il soit procédé à la descente de la tuyère.

Or, une telle solution exige de revoir complètement le dispositif de transfert des préformes chauffées depuis la sortie du four jusqu'à ladite pince de manipulation associée au moule.

Pour les raisons détaillées précédemment avec les mors de la pince de préhension selon l'état de la technique, les mâchoires d'une telle pince de manipulation doivent, pour éviter notamment les interférences lors de la fermeture du moule, être positionnées sur le goulot et le plus souvent le sont dans la gorge annulaire qui est destinée à la bague de sécurité.

Par conséquent, il n'est pas aisé voir impossible que les mors d'une pince de préhension du dispositif de transfert puissent amener la préforme chauffée en la tenant également au même endroit sur le goulot (en particulier la gorge annulaire) que les mâchoires de la pince de manipulation.

Cependant et tel que cela a été expliqué précédemment, il n'existe pas d'alternative pour l'homme du métier dès lors que tant le tronçon de jonction du corps et du goulot de la préforme que le goulot lui-même, de surcroît généralement pourvu d'un filetage, ne s'offrent comme des zones possibles de préhension.

Dans la description qui précède, la pince de manipulation se réfère bien entendu à toute pince destinée à amener et maintenir en position la préforme chaude jusqu'à ce que la fermeture du moule soit réalisée et ne désigne donc pas limitativement une pince selon le document WO-2008/139088.

Une solution possible serait de superposer axialement les mors et les mâchoires de chacune des pinces de préhension et de manipulation, cependant cela n'est pas satisfaisant car - outre les risques d'interférences lors du transfert pince à pince - la quasi-totalité des préformes ne présentent notamment pas de gorge annulaire d'une hauteur suffisante.

De plus, une telle solution requiert la mise en oeuvre de mors et de mâchoires présentant axialement une très faible épaisseur pour en réduire l'encombrement ce qui est notamment préjudiciable à la bonne tenue de la préforme, en particulier par la pince de préhension du fait de la force centrifuge survenant lors du transfert.

En effet, on complètera les explications précédentes en indiquant que, à des cadences toujours accrues, l'entraînement en rotation du dispositif de transfert comportant les bras s'accompagne d'efforts toujours plus importants dus à la force centrifuge, efforts qui sollicitent radialement des préformes toujours plus légères et donc très sensibles.

Pour prévenir les effets de la force centrifuge, il convient donc que les moyens de préhension du dispositif de transfert, tels qu'une pince, soient à même d'assurer un parfait maintien en position de la préforme, notamment axialement, et ceci pour éviter également les inconvénients détaillés ci-après.

Pour parvenir à satisfaire un tel objectif avec une pince, une solution possible consiste à augmenter l'effort de serrage appliqué radialement par les mors de la pince sur la préforme de manière à lutter contre la force centrifuge.

Faute de quoi (et sans discuter de la partie de la préforme pouvant être saisie par les mors), la préforme risque notamment d'être marquée, en particulier par tout déplacement de la préforme entre les mors, voir encore d'être au final mal positionnée pour le transfert vers les mâchoires de la pince de manipulation, les mâchoires de la pince de manipulation étant alors à tout le moins susceptibles, en se refermant, d'abîmer également le goulot de la préforme, voir de provoquer un incident de production au niveau de la machine.

Le but de la présente invention est notamment de remédier aux inconvénients précités de l'état de la technique et de proposer un dispositif de transfert apte à fonctionner avec tout type de préformes et de machine nécessitant de réaliser un transfert d'un objet à goulot entre deux pinces.

En effet, la réduction de la masse des préformes, les cadences de fabrication toujours plus élevées rendent les opérations de transfert difficiles et tout particulièrement le transfert de la préforme chauffée entre la sortie du four et le moule d'une machine de transformation ou de formage.

L'invention a encore tout particulièrement, mais non exclusivement, pour but de proposer un dispositif de transfert apte à permettre un transfert pince à pince d'une préforme chaude, soit un transfert entre une pince de préhension et une pince de manipulation, tant à la sortie du four qu'ensuite à l'entrée de la machine.

Selon une caractéristique importante, les mors de la pince de préhension comportent chacun un évidement qui est ouvert radialement pour permettre le passage de mâchoires d'une pince de manipulation qui sont destinées à coopérer avec le goulot de manière que lesdits mors de la pince de préhension et lesdites mâchoires de la pince de manipulation sont susceptibles de s'interpénétrer sans interférence mécanique lors d'un transfert de la préforme de l'une à l'autre desdites pinces.

Grâce à un tel évidement, il est possible réaliser un transfert pince à pince de l'objet tel que celui d'une préforme chaude entre une pince de préhension et une pince de manipulation.

Dans ce but, l'invention propose un ensemble selon la revendication 1. Avantageusement, le dispositif de transfert équipé de la pince est donc apte à fonctionner à des cadences élevées, tout en étant fiable et d'une grande précision dans le positionnement de l'objet dont le transfert est exécuté depuis ou vers une pince de manipulation, l'ensemble s'effectuant toujours avec un parfait synchronisme.

Le dispositif de transfert effectue un convoyage d'objets, tels que des préformes ou des récipients, à des cadences très élevées et cela de manière particulièrement fiable dès lors que chaque objet se trouve être parfaitement maintenu dans la position déterminée de référence pour être transféré vers une pince de manipulation, la pince assurant notamment un positionnement précis de la gorge annulaire du goulot (destinée à la bague de sécurité) de la préforme pour sa préhension par les mâchoires de ladite pince de manipulation.

Grâce à la conformation des mors de la pince de préhension la pince est également apte à recevoir une préforme transmise par une pince de manipulation dont les mâchoires sont positionnées dans la gorge annulaire de la préforme.

L'invention est donc notamment, mais non exclusivement, destinée à être mise en oeuvre pour réaliser au moins une partie du transfert d'une préforme "chaude" depuis la sortie du four jusqu'au moule d'une machine.

A l'encontre des préjugés techniques de l'homme du métier, l'invention propose une pince de préhension d'une préforme chaude dont les mors comportent notamment une première partie de serrage apte à coopérer avec le tronçon de jonction du corps avec le goulot. Selon l'invention, la première partie de serrage des mors destinée à exercer l'effort radial de serrage présente une épaisseur donnée qui est déterminée pour coopérer avec la seule zone amorphe du tronçon de jonction afin d'éviter de marquer le corps de la préforme. Selon l'invention, la première partie de serrage des mors de la pince est susceptible d'exercer l'effort radial de serrage sur une surface réduite correspondant à la zone amorphe dès lors que le maintien de l'objet dans la position déterminée de référence, c'est-à-dire son blocage, résulte de l'action conjuguée des premières et deuxièmes parties des mors de la pince de préhension, tout déplacement éventuel de la préforme étant immédiatement bloqué par les deuxièmes parties de blocage des mors.

Selon l'invention :
- la deuxième partie de blocage est apte à coopérer sélectivement avec au moins une portion du goulot qui est comprise axialement entre le buvant et la collerette pour maintenir l'objet dans ladite position déterminée de référence ;
- la deuxième partie de blocage est apte à coopérer sélectivement avec au moins une portion du buvant du goulot délimitant le pourtour de l'ouverture pour former au moins une butée axiale apte à maintenir l'objet dans ladite position déterminée de référence ;
- la première partie de serrage de chaque mors de la pince de préhension présente une épaisseur déterminée de manière que, en position fermée de la pince, l'effort de serrage exercé par ladite première partie de chaque mors soit appliqué sur une zone, dite amorphe, du tronçon de jonction qui est directement adjacente à la collerette ;
- la deuxième partie de blocage de chaque mors de la pince de préhension comporte au moins une face de butée apte coopérer sélectivement avec une partie du goulot de l'objet pour maintenir ledit objet dans la position déterminée de référence, en particulier lorsque le dispositif de transfert auquel est lié la pince est mû en déplacement pour réaliser un transfert de l'objet jusqu'à la pince de manipulation ;
- la face de butée de la deuxième partie de blocage de chaque mors présente axialement un jeu par rapport au buvant du goulot de l'objet occupant ladite position déterminée de référence.

Selon d'autres formes de réalisation de l'invention:
- la deuxième partie de blocage est réalisée, venue de matière, en une seule pièce avec la première partie de serrage de manière que chaque mors de la pince de préhension constitue un sous-ensemble monobloc ;
- les mors de la pince de préhension sont réalisés en matière plastique, notamment en polyetherethercetone ;
- la deuxième partie de blocage de chaque mors de la pince de préhension est constituée par un bras de blocage ;
- les bras de blocage comportent chacun une surface tronconique qui, lors de la fermeture de la pince, est apte à coopérer avec le goulot pour positionner l'objet dans ladite position déterminée de référence.

D'autres caractéristiques et avantages de l'invention apparaîtront à la lecture de la description détaillée qui suit pour la compréhension de laquelle on se reportera aux dessins annexés dans lesquels :
- la figure 1 est une vue de dessus qui représente schématiquement une partie d'une installation de fabrication de récipients et qui illustre une application préférée d'un ensemble selon l'invention, lequel est disposé en aval de la sortie d'un four pour alimenter une machine de type souffleuse en réalisant au moins une partie du transfert de préformes conditionnées thermiquement depuis l'un vers l'autre ;
- la figure 1A est une vue de détail qui représente un exemple d'objet à goulot et illustre de manière non limitative une préforme ;
- la figure 2 est une vue en perspective qui représente un exemple de réalisation d'une pince de préhension destinée à équiper un dispositif de transfert d'un ensemble selon l'invention et qui illustre, à vide et en position ouverte, les mors de ladite pince dont les première et deuxième parties délimitent respectivement un évidement pour le passage des mâchoires de la pince de manipulation ;
- la figure 3 est une vue en perspective qui représente, de dessous, la pince de préhension selon la figure 2 et qui illustre les moyens de commande de l'ouverture des mors de la pince à l'encontre d'un organe de rappel élastique des mors vers la position fermée de la pince ;
- la figure 4 est une vue en perspective qui représente la pince de préhension en position fermée et qui illustre une préforme en position déterminée de référence dans le logement de la pince où elle est notamment maintenue par les mors ;
- les figures 5, 6 et 8 illustrent une opération de transfert d'une pince de manipulation vers une pince de préhension, telle que notamment mise en oeuvre en sortie de four pour transférer une préforme chaude vers un moule ;

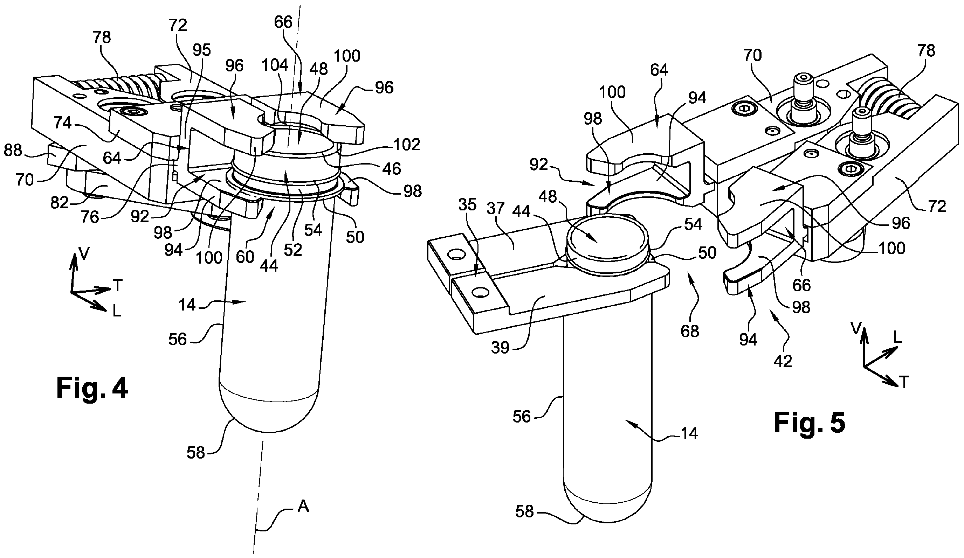

- la figure 5 est une vue en perspective qui, illustrant le début du transfert, représente la pince de préhension qui, en position ouverte, est apte à recevoir une préforme chaude, ayant été conditionnée thermiquement dans le four, ladite préforme étant amenée par une pince de manipulation dont les mâchoires saisissent le goulot au niveau de la gorge annulaire ;

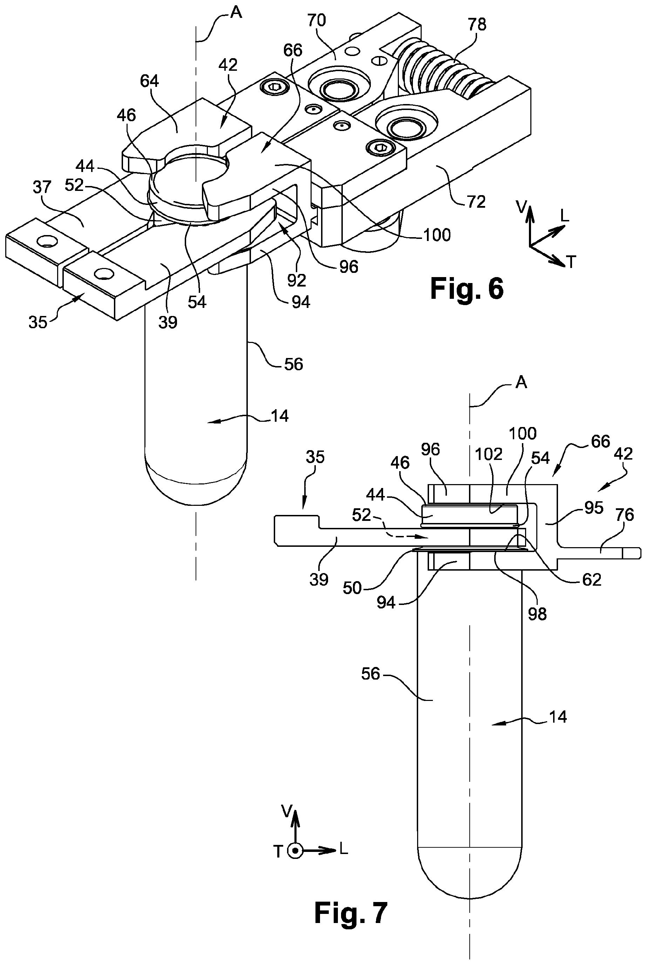

- la figure 6 est une vue en perspective qui représente une préforme et respectivement en position fermée les mors de la pince de préhension ainsi que les mâchoires de la pince de manipulation reçues dans la gorge annulaire et qui illustrent par conséquent l'interpénétration des deux pinces grâce à l'évidement ;
- la figure 7 est une vue de côté selon la figure 6 qui représente la position axiale respective de chacune des pinces par rapport à l'autre pince et au goulot de la préforme ;

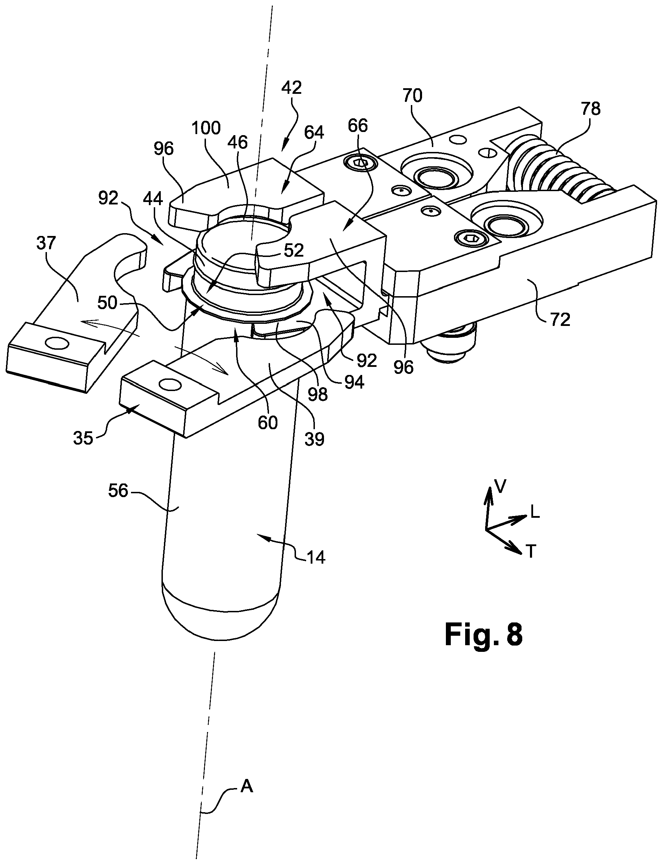

- la figure 8 est une vue en perspective qui représente en position fermée la pince de préhension transportant une préforme dont la gorge annulaire du goulot est libre, et accessible grâce aux évidements, pour les mâchoires de la pince de manipulation qui, associée au moule, sont destinées à venir se positionner dans ladite gorge annulaire de la préforme pour opérer, après le transport vers l'aval, un nouveau transfert entre deux pinces.

Dans la description qui va suivre, des éléments identiques, similaires ou analogues seront désignés par les mêmes chiffres de référence.

Dans la suite de la description, on adoptera à titre non limitatif les orientations longitudinale, verticale et transversale en référence au trièdre (L, V, T) représenté sur les figures.

Par convention, on utilisera à titre non limitatif la direction axiale et la direction radiale qui correspondent respectivement à l'orientation verticale et au plan (L, T) du trièdre ainsi que les termes "avant" et "arrière" en référence à l'orientation longitudinale, ainsi que "supérieur" et "inférieur" en référence à l'orientation verticale et enfin "gauche" ou "droite" et "intérieur" ou "extérieur" en référence à l'orientation transversale.

Les termes "amont" et "aval" sont utilisés en référence au sens de circulation du flux d'objets, tels que les préformes ou les récipients, transférés à travers l'installation de fabrication.

L'invention concerne une ensemble comportant un dispositif 10 de transfert d'objets qui est notamment destiné à équiper une installation 12 de fabrication de récipients.

En effet, le dispositif 10 de transfert est tout particulièrement apte à assurer le transfert d'objets à goulot que sont des préformes 14 ou des récipients 16.

Dans l'application décrite ci-après et donnée à titre non limitatif, le dispositif 10 de transfert d'objets est utilisé dans l'installation 12 pour réaliser le transfert de préformes 14 depuis la sortie d'un four 18 de conditionnement thermique jusqu'à l'un des postes de moulage Mᵢ d'une machine 20, par exemple de soufflage ou d'étirage-soufflage.

La machine 20 est ici de type "rotatif" et comporte un carrousel 22 monté mobile en rotation autour d'un axe vertical O de rotation et pourvu circonférentiellement d'une pluralité de postes de moulage (M₁, M₂, M₃, ... Mᵢ), chaque poste comportant notamment un moule 24.

Avantageusement, chaque poste de moulage comporte une pince 25 de manipulation associée de manière permanente au moule 24.

La pince 25 de manipulation comporte deux mâchoires 26 et 28, dont au moins l'une est montée mobile entre deux positions correspondant respectivement à un état ouvert et un état fermé de ladite pince 25 de manipulation de préforme 12.

Comme indiqué précédemment un tel poste de moulage est plus particulièrement décrit dans le document WO-2008/139088 auquel on se reportera pour de plus amples détails.

Chaque poste de moulage Mᵢ comporte par exemple une tuyère (non représentée ici) associée au moule 24 pour réaliser le formage d'un récipient 16 à partir d'une préforme 14 préalablement conditionnée thermiquement dans le four 18.

Le four 18 comporte principalement des moyens 30 de chauffage associés à des moyens 32 de ventilation, les préformes 14 étant convoyées à travers le four 18 suivant un parcours de chauffe donné par l'intermédiaire d'un dispositif 34 de transport.

Le dispositif 34 de transport comporte par exemple à cet effet une chaîne sans fin mue par des moyens d'entraînement 36 et qui supporte une pluralité de moyens 38 de support d'une préforme 14, encore appelés parfois "tournettes", l'agencement desdits moyens 38 de support déterminant le pas entre deux préformes 14 consécutives.

De préférence, l'installation 12 comporte un premier dispositif 27 de transfert, lequel premier dispositif 27 de transfert est ici une roue pourvue circonférentiellement d'encoches 29 aptes à recevoir chacune une préforme 14.

La roue formant le premier dispositif 27 de transfert est entraînée en rotation suivant le sens horaire autour d'un axe central d'orientation verticale, c'est-à-dire dans le sens opposé à celui du déplacement du dispositif 34 de transport du four 18 comportant les moyens 38 de support des préformes 14.

De préférence, l'installation 12 comporte, en aval du premier dispositif 27 de transfert, un deuxième dispositif 31 de transfert qui est entraîné en rotation suivant le sens anti-horaire autour d'un axe central d'orientation verticale, c'est-à-dire suivant un sens de rotation opposé à celui du premier dispositif 27 de transfert.

Le deuxième dispositif 31 de transfert comporte ici des bras 33 de transfert pourvus chacun d'une pince 35 de manipulation et montés mobiles en rotation autour d'un axe vertical de rotation du dispositif 31.

Chaque pince 35 de manipulation comporte des mâchoires 37 et 39 aptes à saisir le goulot de la préforme 14 chaude, et plus particulièrement une gorge annulaire du goulot de sorte que, après son dévêtissage des moyens 38 de support du dispositif 34 de transport dans le four 18, la préforme 14 chaude est successivement transférée d'abord par rotation de la roue à encoches formant le premier dispositif 27 de transfert puis, après un premier transfert de la préforme 14 chaude intervenant entre ladite roue et le deuxième dispositif 31 de transfert, par rotation du bras 33 de transfert portant la pince 35 jusqu'au dispositif 10 de transfert.

De préférence, le dispositif 10 de transfert comporte une pluralité de bras 40 de transfert qui sont montés mobiles en rotation autour d'un axe O1 et dont chacun est pourvu, à leur extrémité libre, d'une pince 42 de préhension d'un objet, telle qu'ici une préforme 14 "chaude" prête à être transformée en un récipient 16 dans la machine 20.

Avantageusement, l'installation 12 comporte un autre dispositif 10' de transfert qui, analogue au précédent référencé 10, est destiné à transférer vers l'aval les récipients 16 fabriqués par la machine 20 à partir des préformes 14 chaudes issues du four 18.

On a représenté en aval du dispositif 10' de transfert un système de convoyage des récipients 16 qui est apte à acheminer les récipients 16, par exemple vers une autre machine comportant au moins un poste de remplissage et un poste de bouchage.

En variante et de préférence, le dispositif 10' de transfert alimente, directement ou indirectement, au moins une telle machine assurant au moins le remplissage des récipients 16.

De préférence, le système de convoyage des récipients 16 situé en aval du dispositif 10' de transfert est similaire aux dispositifs de transfert 10 et 10'.

Le dispositif 10' de transfert comporte une pluralité de bras 40' de transfert qui sont montés mobiles en rotation autour d'un axe O1' suivant le sens horaire, c'est-à-dire suivant un sens de rotation opposé à celui du carrousel 22 de la machine 20.

Chacun des bras 40' de transfert est pourvu, à son extrémité libre, d'une pince 42 de préhension d'un objet, telle qu'ici un récipient 16 obtenu après transformation d'une préforme 14.

Grâce à la pince, chaque pince 42 de préhension du dispositif 10' de transfert est apte à saisir un récipient 16 maintenu en position par une pince de manipulation dont les mâchoires sont positionnées dans une gorge annulaire que comporte le goulot du récipient 16.

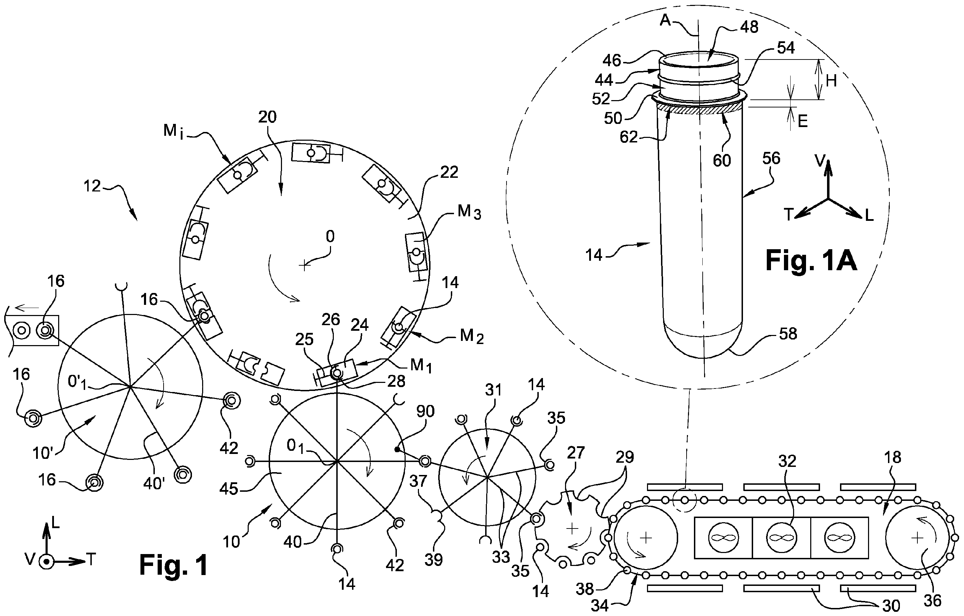

On a représenté sur la figure 1 un agrandissement d'une préforme 14 dont la forme et les dimensions sont données uniquement à titre d'exemple non limitatif dès lors que les préformes 14 sont susceptibles d'en présenter de très variées.

La préforme 14 (encore appelée ébauche) présente un axe A s'étendant verticalement suivant la direction axiale et comporte une première partie à sa forme définitive qui est constituée par un goulot 44 muni d'un buvant 46, délimitant une ouverture 48, et d'au moins une collerette 50 annulaire s'étendant radialement en saillie.

La préforme 14 (ou un récipient 16) est apte être supporté par l'intermédiaire de sa collerette 50 annulaire, notamment en vue de son transport.

De préférence, la préforme 14 est du type comportant une gorge 52 annulaire qui est destinée à recevoir ultérieurement une bague de sécurité et qui est délimitée axialement par une face supérieure de la collerette 50 et un bourrelet 54.

Dans l'exemple représenté, le goulot 44 ne comporte pas de filetage sur sa surface extérieure, de manière connue un tel goulot 44 de préforme 14 correspond au récipient (bouteille) utilisé notamment pour le conditionnement d'huile alimentaire.

En variante non représentée, le goulot 44 comporte un tel filetage sur le tronçon du goulot s'étendant axialement entre le bourrelet 54 et le buvant 46 afin de permettre la fermeture ultérieure du récipient 16 par un bouchon à vis.

La préforme d'axe A principal comporte une deuxième partie constituée par un corps 56 creux s'étendant axialement, en direction opposée à celle de l'ouverture 48 du goulot 44, depuis un tronçon 60 de jonction jusqu'à un fond 58, ledit tronçon 60 de jonction étant adjacent à une face 62 d'appui de la collerette 50.

Selon une caractéristique importante, les préformes 14 et les récipients 16 ont pour particularité de présenter le même goulot dès lors que celui-ci est déjà forme définitive sur la préforme 14, c'est la raison pour laquelle une pince 42 de préhension est apte à saisir pour son transfert tant une préforme 14 qu'un récipient 16.

Si la pince 42 de préhension est apte à saisir un récipient 16 comme une préforme 14, et tout particulièrement une préforme "chaude" sortant du four 18, par comparaison toute pince selon l'état de la technique qui soit susceptible de se saisir du goulot d'un récipient 16 ne conviendra pour autant pas à la saisie d'une préforme 14 "chaude".

En effet, tel qu'expliqué précédemment en préambule, il est constant pour un homme du métier qu'une telle préforme 14 chaude constitue un cas particulier d'objet à transférer.

Une préforme 14 "chaude" est un objet singulier en ce sens que le corps 56 ne peut être saisi par une pince faute d'en voir les mors ou mâchoires pénétrer, en le serrant, dans la matière ramollie par le chauffage et d'y laisser alors, de manière irréversible, des marques et cela vaut en particulier pour le tronçon 60 de jonction de ce dernier.

Bien entendu, la présence de telles marques est inacceptable pour la qualité du récipient 16 final dont ce défaut esthétique entraînera la mise au rebut.

C'est la raison pour laquelle, dans les solutions de l'état de la technique, une préforme 14 chaude est toujours soit supportée par sa collerette 50, soit saisie uniquement par le goulot 44.

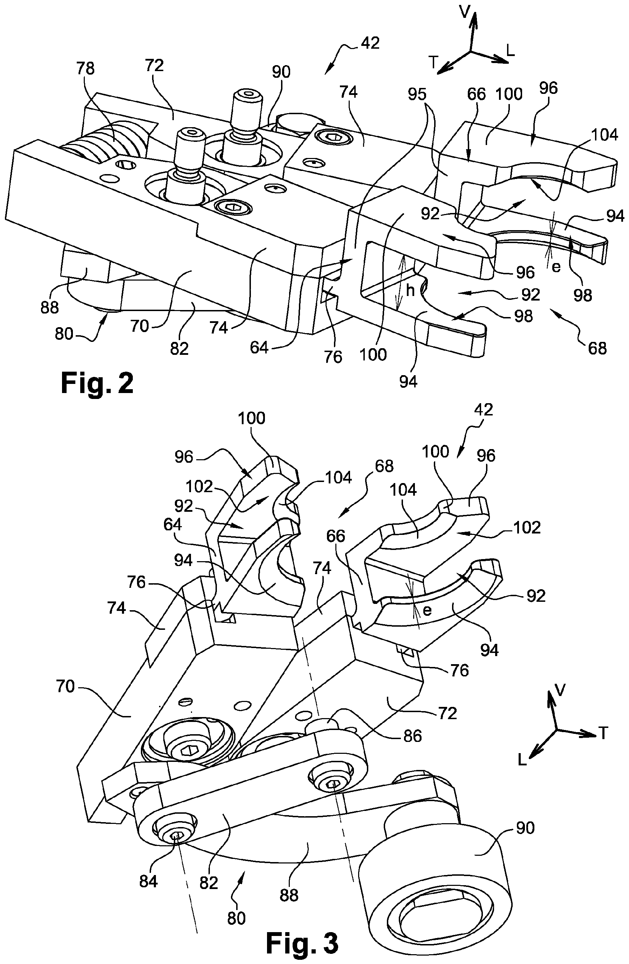

On a représenté à la figure 2, un exemple de réalisation d'une pince 42 de préhension apte à être montée solidaire d'un des bras 40 de transfert d'un dispositif 10 de transfert, notamment pour réaliser le transfert d'une telle préforme 14 chaude dans l'application choisie pour illustrer l'invention.

Tel qu'indiqué précédemment, une pince 42 de préhension est également susceptible d'être montée solidaire d'un des bras 40' de transfert du dispositif 10' de transfert afin d'effectuer une opération de transfert des récipients 16 sortant de la machine 20.

La pince 42 de préhension comporte au moins un premier mors 64 et un deuxième mors 66 délimitant entre eux un logement 68 apte à recevoir une partie dudit objet, plus précisément ici au moins le goulot 44 de la préforme 14.

Avantageusement, les mors 64 et 66 de la pince 42 de préhension sont symétriques suivant un plan vertical d'orientation longitudinale, ainsi les mêmes références seront utilisées pour désigner les mêmes parties fonctionnelles sur chacun des mors 64 et 66.

La pince 42 de préhension est susceptible d'occuper au moins une position ouverte illustrée par les figures 2 et 3 dans laquelle l'objet, ici une préforme 14, est susceptible d'être extrait hors ou introduit entre les mors 64, 66 pour occuper une position déterminée de référence dans le logement 68.

La pince 42 de préhension est susceptible d'occuper aussi une position fermée illustrée à la figure 4 dans laquelle lesdits mors 64, 66 coopèrent avec au moins une partie de l'objet occupant ladite position déterminée de référence.

De préférence, les deux mors 64 et 66 sont montés mobiles, par exemple ici en rotation, de sorte que les mors 64, 66 sont sélectivement aptes à s'écarter ou se rapprocher l'un de l'autre de manière que la pince 42 occupe respectivement lesdites positions ouverte et fermée.

En variante, l'un seulement des mors 64, 66 est monté mobile tandis que l'autre mors est fixe. En variante encore, les mors 64 et 66 sont montés mobiles en translation et non en rotation.

La pince 42 de préhension comporte deux leviers 70 et 72 articulés à une extrémité longitudinale avant libre de chacun desquels l'un des mors 64, 66 est rapporté à fixation par l'intermédiaire de moyens 74 de fixation des mors 64, 66 aptes à serrer une patte 76 de fixation qui s'étend longitudinalement vers l'arrière des mors.

Avantageusement, les mors 64, 66 seuls d'une pince 42 sont ainsi susceptibles d'être changés pour s'adapter à un nouvel objet fabriqué, nécessitant par exemple de changer les mors en fonction du diamètre du goulot 44 de l'objet 14 ou 16.

Avantageusement, la pince 42 comporte un organe 78 de rappel élastique, ici un ressort à spirales, qui est agencé à l'extrémité longitudinale arrière entre les leviers 70 et 72.

De préférence, l'organe 78 de rappel élastique sollicite lesdits leviers 70 et 72, et donc les mors 64 et 66 rapportés à fixation sur les leviers, vers la position fermée de la pince 42 de préhension de sorte que la pince 42 se referme automatiquement et qu'il n'est besoin que d'en commander l'ouverture à l'encontre dudit organe 78 de rappel élastique.

Pour ce faire, la pince 42 comporte un mécanisme 80 de commande de l'ouverture des mors 64 et 66 qui est apte à agir sur les leviers 70 et 72 pour provoquer sélectivement leur écartement respectif, de la position fermée à la position ouverte, et ce à l'encontre de l'effort de rappel élastique exercé par l'organe 78 sur lesdits leviers 70 et 72.

On connaît de l'état de la technique de nombreux mécanismes associés aux pinces et aptes à en commander l'ouverture et/ou la fermeture, notamment à l'encontre ou avec l'assistance d'un organe de rappel élastique.

Le cas échéant, la pince comporte encore un dispositif de verrouillage du mécanisme tel que par exemple décrit dans le document WO-2008/132090 qui est propre à verrouiller les moyens d'actionnement du mécanisme pour maintenir la pince dans l'une ou l'autre des positions ouverte et fermée.

En conséquence, le mécanisme 80 de commande ne sera pas décrit en détails, pas plus que les nombreuses variantes de réalisation possible d'un tel mécanisme.

Dans l'exemple illustré aux figures, la pince 42 est une pince de type commandée, c'est-à-dire une pince actionnée par un tel mécanisme 80 de commande pour obtenir sélectivement l'une des positions ouverte ou fermée.

Toutefois, la pince 42 n'est nullement limitée à cet exemple et pourrait notamment être dépourvue d'un tel mécanisme 80 de commande.

En variante non représentée, la pince 42 est une pince de type "clips" c'est-à-dire une pince dont l'ouverture des mors de la position fermée vers la position ouverte est provoqué par l'introduction (en force) de la préforme 14 elle-même afin de provoquer l'écartement des mors de la pince et ceci à l'encontre d'un organe de rappel élastique rappelant lesdits mors vers la position fermée.

Comme on peut mieux le voir sur la figure 3, le mécanisme 80 de commande comporte ici une biellette 82 dont les extrémités sont respectivement liées, avec possibilité de rotation, autour d'un pivot 84 et d'un pivot 86, la biellette 82 étant apte à être actionnée sélectivement par un organe 88 d'actionnement afin de solliciter l'écartement des leviers 70 et 72 à l'encontre du ressort 78.

L'organe 88 d'actionnement est ici relié à l'une de ses extrémités au pivot 84 d'articulation de la biellette 82 sur le levier 70 et comporte à son autre extrémité libre une came, ici réalisée sous la forme d'un galet 90.

Le galet 90 est destiné à coopérer avec une surface de came (non représentée) portée par un plateau 45 (voir figure 1) du dispositif 10 de transfert de manière à agir sélectivement sur le galet 90 pour provoquer, en fonction de la position angulaire du bras 40 de transfert par rapport à l'axe O1, le déplacement de l'organe 88 d'actionnement, et donc celui de la biellette 82, et subséquemment commander l'ouverture de mors 64, 66 de la pince 42.

Tant que l'effort exercé sur le galet 90 solidaire de l'organe d'actionnement 88 pour provoquer l'ouverture de la pince 42 est supérieur à l'effort de rappel exercé par le ressort 78 sur les leviers 70 et 72, les mors 64, 66 sont maintenus écartés et la pince 42 est en position ouverte.

Ainsi, le plateau 45 du dispositif 10 de transfert peut, pour solliciter le galet 90 et commander l'ouverture de la pince 42 grâce au mécanisme 80, ne comporter respectivement une surface de came qu'en vis-à-vis du dispositif 31 de transfert du côté de la sortie du four 18, soit en début du parcours de transfert, et qu'en vis-à-vis du poste de moulage, soit en fin du parcours de transfert, entre ces extrémités du parcours l'organe 78 de rappel élastique maintenant la pince 42 en position fermée.

Grâce à quoi, une partie de la préforme 14 est susceptible d'être introduite dans ou extraite hors du logement 68, délimité circonférentiellement par les mors 64 et 66, suivant que l'endroit où l'on se trouve sur le parcours du transfert.

Le parcours s'étend ici de la sortie du four 18 où la préforme 14 chaude est d'abord transférée par la roue 27 à encoches avant d'être saisie par une pince 35 de manipulation du dispositif 31 de transfert puis amenée jusqu'à la machine 20 par une pince 42 du dispositif 10 de transfert où la préforme 14 est alors transférée à une pince 25 de manipulation.

On décrira ci-après un exemple de réalisation préféré des mors 64, 66 de la pince 42 de préhension. Les mors 64, 66 de la pince 42 de préhension comportent chacun un évidement 92 qui est ouvert radialement pour permettre le passage de mâchoires 26, 28 ; 37, 39 d'une pince 25 ; 35 de manipulation qui sont destinées à coopérer avec le goulot 44 de manière que lesdits mors 64, 66 de la pince 42 de préhension et lesdites mâchoires 26, 28 ; 37, 39 de la pince 25 ; 35 de manipulation sont susceptibles de s'interpénétrer sans interférence mécanique lors d'un transfert de l'objet 14 ou 16 de l'une à l'autre desdites pinces et vice et versa.

Ainsi, les mors 64 et 66 de la pince 42 de préhension comportent respectivement chacun un évidement 92 qui est ouvert radialement pour permettre le passage entrant ou sortant des mâchoires de l'une des pinces 25 ou 35 de manipulation.

Les mâchoires des pinces 25 ou 35 de manipulation sont en particulier destinées à être reçues dans la gorge annulaire 52 pour se saisir de la préforme 14 chaude à transférer du four 18 à l'un des moules 24 de la machine 20. Selon l'invention, les mors 64, 66 de la pince 42 de préhension sont aptes à opérer un transfert pince à pince d'une préforme 14.

Dans le cas de l'application décrite ici, les mors 64, 66 de la pince 42 de préhension sont aptes à recevoir une préforme 14 chaude des mâchoires 37 et 39 d'une pince 35 de manipulation du dispositif de transfert 31 (agencé en sortie de four 18 en aval de la roue 27 à encoches) ou encore de transmettre, après l'avoir transporté sur un parcours donné, cette même préforme 14 chaude aux mâchoires 26, 28 d'une autre pince 25 de manipulation.

Grâce à l'évidement 92 dont est pourvu chaque mors 64 et 66 de la pince 42 de préhension, les mâchoires des pinces 25 ou 35 de manipulation sont susceptibles de coopérer avec le goulot 44, notamment la gorge annulaire 52, d'une préforme 14 alors que cette même préforme 14 est tenue par les mors 64, 66 de la pince 42.

En effet, lesdits mors 64, 66 de la pince 42 de préhension et lesdites mâchoires 26, 28 ; 37, 39 de la pince 25 ; 35 de manipulation sont susceptibles de s'interpénétrer, ici lors du transfert de ladite préforme 14 chaude de l'une 35 à l'autre 42 desdites pinces puis de l'une 42 à l'autre 25 desdites pinces et cela sans aucune interférence mécanique. Selon l'invention, les mors 64, 66 de la pince 42 de préhension comportent chacun respectivement une première partie 94 de serrage apte, en position fermée de la pince 42, à coopérer avec ladite au moins une partie de la préforme 14 pour y appliquer un effort radial de serrage propre à permettre de maintenir, dans le logement 68 de la pince 42, la préforme 14 occupant ladite position déterminée de référence. Selon l'invention, les mors 64, 66 de la pince 42 de préhension comportent encore chacun respectivement une deuxième partie 96 de blocage apte à coopérer sélectivement avec au moins une portion du goulot 44 pour maintenir la préforme 14 dans ladite position déterminée de référence.

La position déterminée de référence correspond avantageusement à une position dans laquelle l'axe A principal de la préforme 14 est coaxial à l'axe X des mors 64, 66 de la pince 42 ou des mâchoires de la pince de manipulation 25 ou 35 de sorte que la préforme 14 étant en position parfaitement verticale et les pinces 42 et 25 ou 35 coplanaires, le transfert s'opère alors avec précision.

Le mors 64 de la pince 42 présente globalement une forme en "U" couché comportant une première partie 94 de serrage s'étendant en dessous de la deuxième partie 96 de blocage, lesdites parties 94 et 96 du mors 64 étant séparées axialement l'une de l'autre par un évidement 92 de hauteur "h", comme le sont également les parties 94 et 96 de l'autre mors 66 de la pince 42.

Les première et deuxième parties 94, 96 de chacun des mors 64, 66 sont reliées par une partie 95 de liaison d'orientation verticale à partir de laquelle s'étend longitudinalement vers l'arrière la patte 76 de fixation aux leviers 70, 72 de la pince 42. Selon l'invention, la première partie 96 de serrage de chaque mors 64, 66 de la pince 42 de préhension présente une épaisseur "e" déterminée de manière que, en position fermée de la pince 42 (voir figure 4), l'effort de serrage exercé par ladite première partie 94 de chaque mors 64 et 66 soit appliqué sur une zone bien déterminée, dite amorphe, du tronçon 60 de jonction laquelle est directement adjacente à la collerette 50.

La zone amorphe de la préforme s'étend axialement sur une hauteur "E" qui est supérieure ou sensiblement égale à l'épaisseur "e" de la première partie 94 de serrage de chaque mors 64, 66 de la pince 42 de préhension.

La zone, dite amorphe, matérialisée par des hachures (voir la zone hachurée sous la collerette 50 sur la figure 1A) correspond à tout ou partie du tronçon 60 de jonction du corps 56 avec le goulot 44.

La zone amorphe de la préforme 14 est particulièrement difficile à conditionner thermiquement dans le four 18 car elle est juste adjacente à la collerette 50 du goulot 44 pour lequel il est rappelé que, contrairement au corps 56, on met tout en oeuvre pour éviter de le chauffer afin de pouvoir lui conserver sa forme définitive.

Pour le conditionnement thermique et le formage, la présence d'une telle zone amorphe est un inconvénient notoire dès lors que s'y concentre une quantité de matière importante qui n'est pas ou moins exploitable dans le récipient 16 final, faute de pouvoir être étirée par le fluide sous pression notamment.

Avantageusement, la conception des mors 64, 66 de la pince 42 avec des parties 94 de serrage de faible épaisseur "e" tire profit de la présence d'une telle zone amorphe dont la matière qui, n'est pas ou très peu ramollie, constitue une surface sur laquelle un effort radial de serrage peut être appliqué avec un risque réduit de voir les parties 94 des mors 64, 66 y apposer des marques.

L'invention va à l'encontre des préjugés techniques de l'homme du métier en assurant avec la pince 42 la saisie d'une préforme 14 chaude au niveau du tronçon 60 de jonction du corps 56 avec le goulot 44.

L'invention va tout d'abord à l'encontre des préjugés de l'homme du métier car il est constant qu'une telle saisie sur une préforme 14 chaude est de nature à provoquer l'apparition de marques résultant de l'effort de serrage appliqué par les mors de la pince.

Or, c'est précisément au niveau du tronçon 60 de jonction du corps 56 avec le goulot 44 que la partie de serrage de chaque mors de la pince 42 applique un effort de serrage.

Grâce au fait que chaque mors 64, 66 de la pince 42 comporte également une deuxième partie 96 de blocage, il est en effet possible d'optimiser l'effort radial de serrage appliqué par la première partie 94 de serrage de chaque mors 64, 66, sans que cela ne soit préjudiciable au bon maintien de la préforme 14 dans ladite position de référence déterminée.

De plus, la pince 42 est avantageusement réalisée en un matériau non métallique, de préférence un matériau plastique tel que le polyetherethercétone (encore désigné par l'acronyme PEEK).

En effet, une pince 42 réalisée en de tels matériaux plastiques présente, par comparaison avec des matériaux métalliques comme l'acier, une dureté inférieure et par conséquent un moindre écart de dureté avec le matériau constitutif de la préforme 14 comme du PET.

L'invention va ensuite à l'encontre des préjugés de l'homme du métier car il est constant qu'une telle saisie sur une préforme 14 chaude est également et surtout de nature à provoquer l'apparition de "points froids" précités qui résultent du transfert thermique s'établissant alors par conduction entre les parties en contact de la préforme 14 et de la pince 42.

En effet, on rappelle que le tronçon 60 de jonction du corps 56 avec le goulot 44 de la préforme 14 est une partie difficile tant à chauffer lors du conditionnement thermique dans le four 18 qu'à étirer ensuite dans la machine 20 de transformation pour l'obtention d'un récipient 16.

Avantageusement et par comparaison notamment avec les matériaux métalliques comme l'acier employé jusqu'alors, au moins le matériau utilisé pour la partie 94 de serrage de chaque mors 64, 66 de la pince est un matériau présentant de préférence une faible conductivité thermique de manière à limiter les échanges thermiques.

Grâce à l'utilisation de matériaux de faible conductivité thermique, comme des matériaux plastiques tels que le PEEK par opposition aux matériaux métalliques tels que l'acier, on réduit les échanges thermiques survenant, d'une part, entre la préforme 14 chaude et la pince 42 et, d'autre part, entre la pince 42 et l'air environnant de nature à accroître encore la différence de température entre la pince 42 et la préforme 14 chaude.

En effet, d'importants mouvements d'air existent dans une telle installation 12 et cela en raison notamment de la rotation à haute vitesse du carrousel 22 de la machine 20 et/ou encore de l'utilisation de systèmes d'insufflation d'air filtré destinés à établir une surpression à l'intérieur d'une enceinte disposée autour des moyens de fabrication de l'installation 12 afin de limiter les risques de contamination des objets 14, 16 lors du procédé de fabrication.

La première partie 94 de serrage de chaque mors de la pince 42 de préhension comporte une face 98 de support destinée, lorsque la pince 42 est en position fermée autour de la préforme 14 occupant ladite position déterminée de référence, à coopérer avec une partie de la face 62 d'appui de la collerette 50 radiale qui est adjacente au tronçon 60 de jonction.

En variante non représentée, la première partie 94 de serrage de chaque mors 64, 66 de la pince 42 comporte respectivement une encoche qui, délimitée radialement par un rebord s'étendant verticalement, présente une forme complémentaire d'au moins une portion de la collerette 50 qui est destinée à y être reçue lorsque la pince 42 est en position fermée autour de la préforme 14 occupant ladite position déterminée de référence.

De préférence, la profondeur de l'encoche est inférieure à l'épaisseur totale de la collerette 50 pour limiter les risques d'interférence avec les mâchoires d'une des pinces 25 ou 35 de manipulation se positionnant axialement dans la gorge annulaire 52 lors d'un des transferts pince à pince.

Avantageusement, la préforme 14 est immobilisée au moins axialement par la deuxième partie 96 de blocage qui tend à maintenir ou maintient la face 62 d'appui de la collerette 50 en contact permanent avec la face 98 de support de la première partie 94 de chaque mors 64 et 66.

La deuxième partie 96 de blocage est apte à coopérer sélectivement avec au moins une portion du buvant 46 du goulot 44 délimitant le pourtour de l'ouverture 48 pour former au moins une butée axiale apte à maintenir la préforme 14, en variante un récipient 16, dans ladite position déterminée de référence. Selon l'invention, la deuxième partie 96 de blocage est apte à coopérer sélectivement avec au moins une portion du goulot 44 qui est comprise axialement entre le buvant 46 et la collerette 50 pour maintenir l'objet 14, 16 dans ladite position déterminée de référence. La deuxième partie 96 de blocage est en contact permanent avec ladite portion du goulot 44 ou distante de cette dernière d'un jeu d'une valeur donnée. Selon l'invention, le fait que la deuxième partie 96 de blocage coopère sélectivement avec une portion du goulot 44 qui est comprise axialement entre le buvant 46 et la collerette 50 (à l'exception de la portion telle que la gorge 52 destinée à la pince 35 de manipulation) permet d'éviter tout contact avec le buvant 46 du goulot 44. Selon l'invention, la deuxième partie 96 de blocage de chaque mors 64, 66 de la pince 42 de préhension est constituée par un bras 100 de blocage comportant une face 102 de butée apte coopérer sélectivement avec une partie du goulot 44 de la préforme 14 pour la maintenir dans la position déterminée de référence, en particulier lorsque le dispositif 10 de transfert auquel est lié la pince 42 est mû en déplacement pour réaliser, après un premier transfert depuis la pince 35 de manipulation, un second transfert de la préforme 14 chaude jusqu'à la pince 25 de manipulation.

De préférence, la face 102 de butée est plane et s'étend dans un plan globalement horizontal.

Avantageusement, la face 102 de butée de la deuxième partie 96 de blocage de chaque mors 64, 66 présente axialement un jeu "j" par rapport au buvant 46 du goulot 44 de la préforme 14 occupant ladite position déterminée de référence.

Pour ce faire, la valeur de la hauteur "h" de l'évidement 92 (voir figure 2) correspondant à la côte axiale entre la face 98 de support, ici supérieure, de la première partie 94 de serrage et la face 102 de butée, ici inférieure, de la deuxième partie 96 de blocage est déterminée pour être supérieure, d'au moins la valeur du jeu axial "j", par rapport à la côte axiale "H" du goulot 44 d'une préforme 14 illustrée sur la figure 1A.

Grâce à un tel jeu axial "j", le buvant 46 du goulot 44 est préservé en n'étant pas en contact en permanence avec la face 102 de butée alors susceptible d'y exercer un effort de blocage orienté axialement vers le bas.

En variante, la face 102 de butée de la deuxième partie 96 de blocage de chaque mors 64, 66 est en contact permanent avec le buvant 46 du goulot 44 de la préforme 14 occupant ladite position déterminée de référence.

En variante non représentée, la face 102 de butée appartient à une pièce mobile liée à la deuxième partie 96 de la pince 42 avec une possibilité de débattement, en particulier ici selon au moins la direction axiale de manière à pouvoir absorber un jeu par rapport au buvant 46 du goulot 44 de la préforme 14.

De préférence, la face 102 de butée appartient à une pièce réalisée en un matériau déformable, tel qu'un élastomère, ou en variante liée à la deuxième partie 96 de la pince 42 avec interposition d'un organe élastique tel qu'un ressort.

Ainsi, la deuxième partie 96 de blocage est apte soit à bloquer sélectivement le goulot 44 de la préforme 14 lorsque cette dernière quitte la position déterminée de référence, soit à coopérer en permanence avec le buvant 46 pour bloquer la préforme 14 et cela en combinaison avec la première partie 94 de serrage dont la face 98 immobilise axialement la préforme 14 par sa collerette 50.

De préférence, la deuxième partie 96 de blocage est réalisée, venue de matière, en une seule pièce avec la première partie 94 de serrage de manière que chaque mors 64, 66 de la pince 42 de préhension constitue un sous-ensemble monobloc.

Avantageusement, on accroît ainsi la maîtrise des cotes des surfaces fonctionnelles des mors 64, 66, en particulier la cote axiale de l'évidement 92 entre la face 98 de support et la face 102 de butée.

Avantageusement, les mors 64 et 66 de la pince 42 de préhension sont réalisés en matière plastique, notamment en polyetherethercetone (encore désigné par l'acronyme PEEK).

Grâce à l'utilisation de telle matière non métallique, on limite le transfert thermique entre les mors 64, 66 de la pince et la préforme 14, c'est-à-dire le phénomène de "points froids" précité.

Avantageusement, l'utilisation d'une telle matière plastique permet de réaliser les mors 64, 66 de la pince 42 en une seule pièce par moulage avec une grande précision.

De préférence, les bras 100 de blocage comportent chacun une surface 104 tronconique qui, lors de la fermeture de la pince 42, est apte à coopérer avec le goulot 44 pour faciliter le positionnement de la préforme 14 ou d'un récipient 16 dans ladite position déterminée de référence.

On décrira maintenant, en référence aux figures 5 à 8, le fonctionnement du dispositif 10 de transfert dans l'application particulière indiquée précédemment, c'est à dire un premier transfert pince à pince lors de la saisie d'une préforme 14 chaude issue du four 18 pour la transporter jusqu'à la machine 20 où par ailleurs un second transfert pince à pince de ladite préforme 14 chaude est effectué vers une pince 25 de manipulation.

Comme on peut le voir sur les figures 1 et 5, après son dévêtissage des moyens 38 de support du dispositif 34 de transport dans le four 18, la préforme 14 chaude vient (après un premier transfert par la roue 27 à encoches) à être tenue en position verticale par les mâchoires 37 et 39 de la pince 35 de manipulation du dispositif 31 de transfert.

Le bras 33 de transfert portant à son extrémité libre la pince 35 de manipulation dont les mâchoires 37 et 39 sont logées dans la gorge annulaire 52 de la préforme 14 est alors entraîné en rotation autour de l'axe vertical de rotation du dispositif 31 jusqu'à venir se positionner en vis-à-vis de la pince 42 de préhension qui est en position ouverte.

La pince 42 de préhension est solidaire d'un des bras 40 de transfert du dispositif 10 de transfert, les dispositifs 10 et 31 de transfert sont synchronisés entre eux pour que les pinces 42 de préhension et 35 de manipulation opèrent le transfert de la préforme 14 chaude de l'une vers l'autre.

La pince 42 de préhension est commandée en ouverture par l'intermédiaire du mécanisme 80 pour occuper sa position ouverte lorsqu'elle vient comme illustré par la figure 5 à la rencontre de la pince 35 de manipulation transportant la préforme 14.

Grâce à l'évidemment 92 que comporte chaque mors 64 et 66 de la pince 42 de préhension, les mâchoires 37 et 39 de la pince 35 de manipulation vont pouvoir s'interpénétrer sans heurts, lesdites mâchoires 37, 39 pénétrant longitudinalement de l'avant vers l'arrière dans le logement 68 délimité par les mors de la pince 42 occupant sa position ouverte et ceci jusqu'à ce que la préforme 14 parvienne à la position déterminée de référence dans laquelle son axe A principal est coaxial et avantageusement confondu avec les axes verticaux des mors 64, 66 et mâchoires 37, 39 des pinces 42 et 35.

A un point particulier entre les dispositifs 10 et 31 de transfert et tel qu'illustré à la figure 6, le bras 33 de transfert portant la pince 35 de manipulation se retrouve aligné radialement avec le bras 40 de transfert portant la pince 42 de préhension, les deux pinces 35 et 42 étant interpénétrées l'une dans l'autre autour de la préforme 14.

A cet instant, le mécanisme 80 associé à la pince 42 de préhension est commandé pour cesser d'exercer un effort sur le galet 90 porté par l'organe 88 d'actionnement de la biellette 82 de sorte que l'effort de rappel élastique exercé par le ressort 78 provoque alors la fermeture automatique de la pince 42 et des mors 64 et 66 autour de la préforme 14.

Comme on peut le voir sur les figures 6 et 7 tout particulièrement, les mâchoires 37 et 39 de la pince 35 de manipulation sont positionnées axialement dans la gorge 52 annulaire tandis que, pour la pince 42 de préhension, les premières parties 94 de serrage de chaque mors 64 et 66 se positionnent sur la zone amorphe du tronçon 60 de jonction, juste sous la collerette 50, et les deuxièmes parties 96 formées par les bras 100 de blocage se positionnent simultanément à l'aplomb du buvant 46 du goulot 44 de la préforme 14.

La pince 42 de préhension maintient alors la préforme 14 qui est avantageusement supportée par la face 98 de support de première partie 94 de serrage de chaque mors 64, 66 contre laquelle la face 62 d'appui de la collerette 50 repose de manière que, outre l'effort radial de serrage exercé par les mors 64, 66 sur la zone amorphe, la préforme 14 est également supportée axialement par l'intermédiaire de sa collerette 50.

La deuxième partie 96 de blocage formée par les bras 100 de blocage coopère ou non selon qu'un jeu axial "j" est présent entre la face 102 de butée et le buvant 46 du goulot 44.

De préférence, l'ouverture des mâchoires 37, 39 de la pince 35 de manipulation est alors commandée, par exemple au moyen d'un mécanisme de commande associé à la pince 35, pour libérer la préforme 14 désormais maintenue par les seuls mors 64 et 66 de la pince 42 de préhension, le premier transfert de la préforme 14 chaude étant alors effectué.

En variante, la pince 35 de manipulation ne comporte pas de mécanisme de commande de son ouverture et/ou fermeture et c'est la préforme 14 elle-même qui provoque l'ouverture des mâchoires 37, 39 à l'encontre d'un organe de rappel élastique sollicitant lesdites mâchoires 37, 39 vers la position fermée.

En effet, le goulot 44 de la préforme n'étant pas chauffé dans le four 18 et la gorge annulaire 52 étant destinée à recevoir ultérieurement une bague de sécurité, il est possible de simplifier la conception de la pince 35 de manipulation, la préforme 14 étant alors introduite ou extraite en force des mâchoires 37, 39, tel qu'évoqué précédemment sous la désignation de pince de type "clips" par opposition à une pince à ouverture commandée.

Comme on peut le voir sur la figure 8, la pince 35 de manipulation dont les mâchoires 37, 39 sont en position ouverte libère alors totalement la préforme 14 qui est transportée par le bras 40 de transfert du dispositif 10 de transfert dont ladite pince 42 de préhension est solidaire en déplacement.

La rotation autour de l'axe O du bras 40 de transfert va alors transporter la préforme 14 chaude jusqu'à la machine 20 où la préforme 14 chaude sera alors transférée une seconde fois de la pince 42 de préhension vers une pince 25 de manipulation.

De préférence, ladite pince 25 de manipulation est une pince associée au poste de moulage et donc embarquée sur la machine 20 du type de celle décrite et représentée dans le document WO-2008/139088.

Il n'est nul besoin de décrire en détail le second transfert de la préforme 14 chaude de la pince 42 de préhension vers la pince 25 de manipulation dès lors qu'un tel transfert est analogue au premier transfert qui vient décrit exception faite de ce qu'il s'effectue dans l'autre sens.

Par conséquent, une illustration chronologique d'un tel second transfert est obtenue simplement en inversant l'ordre des figures, le transfert débutant à la figure 8 alors que la préforme 14 est maintenue par la pince 42 de préhension pour s'achever à la figure 5 où la préforme 14 est maintenue par les mâchoires 26 et 28 de la pince 25 de manipulation.

Pour la suite et pour de plus amples détails, on pourra encore se reporter au document WO-2008/139088 aux fins d'illustration de la mise en place de la préforme 14 dans le moule 24 par une telle pince 25 de manipulation après son transfert depuis ladite pince 42 de préhension du dispositif 10 de transfert.

Avantageusement, une pince 42 de préhension de l'ensemble selon l'invention est apte à être utilisée pour réaliser différentes opérations de transfert au sein d'une installation 12 de fabrication de récipient 16, tant des préformes 14 chaudes de la sortie du four 18 vers la machine 20 ainsi qu'il vient d'être décrit, qu'en sortie de cette machine 20 celui des récipients 16 obtenus par un dispositif 10' de transfert.

D'autres transferts de récipients sont encore parfois mis en oeuvre pour réaliser ensuite directement le remplissage des récipients 16 et la fermeture desdits récipients 16 remplis, par exemple par bouchage.

A titre d'exemple, les pinces de préhension de l'ensemble selon l'invention sont également susceptibles d'être utilisées pour opérer des divisions d'un flux d'objets tels que des préformes ou des récipients, notamment pour réaliser un dédoublement.

En effet, le goulot 44 de la préforme 14 présentant sa forme définitive et étant identique au goulot du récipient 16, les pinces 42 de préhension sont alors indifféremment aptes à se saisir par ce goulot 44 tant d'une préforme 14 que d'un récipient 16 pour réaliser notamment des transferts.

Bien entendu, l'exemple de réalisation des mors 64 et 66 de la pince 42 de préhension qui vient d'être décrit n'est nullement limitatif, la deuxième partie 96 de blocage en particulier pourrait être réalisée autrement que sous la forme de bras 100 de blocage solidaire de la première partie 94 de serrage.

En variante non représentée, la deuxième partie 96 de blocage de la pince 42 de préhension est constituée par au moins un organe de blocage qui, fixe ou monté mobile entre une position escamotée et une position de blocage, est indépendant de la première partie 94 de serrage des mors 64, 66.

La deuxième partie 96 de blocage de la pince 42 de préhension est par exemple constituée par au moins un organe de blocage fixe, tel qu'une plaque s'étendant horizontalement, qui présente une face de blocage avec laquelle au moins une portion du goulot 44 comprise axialement entre le buvant 46 et la collerette 50 ou une partie du buvant 46 du goulot 44 de l'objet, préforme 14 ou récipient 16, coopère lorsque ledit objet occupe une position déterminée de référence.

Comme précédemment, l'organe de blocage est susceptible d'être positionné pour présenter un jeu axial déterminé par rapport au goulot 44 de manière que, sans contact permanent, au moins une portion du goulot 44 de l'objet, telle que la partie du buvant 46, vient sélectivement buter contre ladite face pour maintenir l'objet dans ladite position déterminée de référence.

Grâce à quoi, on obtient un transfert optimal y compris lorsque le dispositif de transfert étant mû en déplacement, des vibrations ou les effets de la force centrifuge sont comme précédemment à même de solliciter l'objet à quitter la position déterminée de référence.

Selon un autre exemple, la deuxième partie 96 de blocage de la pince 42 de préhension est constituée par au moins un organe mobile entre une position escamotée dans laquelle ledit organe est escamoté, notamment pour faciliter l'introduction de l'objet 14, 16 dans un logement central délimité par la pince 42, et une position de blocage dans laquelle ledit élément est apte à coopérer avec le goulot 44 pour assurer le blocage axial de l'objet 14, 16 occupant ladite position déterminée.

De préférence, ledit au moins un organe de blocage est monté mobile en translation suivant la direction axiale et commandé sélectivement en déplacement entre lesdites positions escamotée et de blocage.

En variante, ledit au moins un organe de blocage est monté mobile en rotation autour d'un axe de pivotement s'étendant orthogonalement à la direction axiale et commandé sélectivement en déplacement entre lesdites positions escamotée et de blocage.

Par comparaison avec les variantes de réalisation de la deuxième partie 96 de blocage qui viennent d'être décrites, l'exemple de réalisation en la forme de bras 100 illustrée sur les figures présentent différents avantages.

En effet, les bras 100 de transfert étant solidaires de la première partie 94 de serrage, l'actionnement des mors 64, 66 entre les positions ouverte et fermée de la pince 42 est simple à commander car simultané, donc parfaitement synchrone, et facilite la mise en place de l'autre pince de manipulation, portant ou non la préforme 14. De plus, l'ouverture 48 de la préforme 14 reste accessible entre les bras 100 de blocage.

## Revendications

1. Ensemble comportant :
un objet (14, 16), tel qu'une préforme ou un récipient (16), comportant d'une part un goulot (44) à sa forme définitive muni d'un buvant (46) délimitant une ouverture (48) et d'au moins une collerette (50) annulaire s'étendant radialement en saillie et, d'autre part, un corps (56) creux s'étendant axialement, en direction opposée à celle de l'ouverture (48) du goulot (44), depuis un tronçon (60) de jonction adjacent à la collerette (50) jusqu'à un fond (58), et
un dispositif (10) de transfert d'objets (14, 16) comportant au moins une pince (42) de préhension comportant au moins un premier mors (64) et un deuxième mors (66) délimitant entre eux un logement (68) qui reçoit une partie dudit objet (14, 16), la pince (42) de préhension étant susceptible d'occuper au moins une position ouverte dans laquelle un objet (14, 16) est susceptible d'être extrait ou introduit entre les mors (64, 66) pour occuper une position déterminée de référence dans le logement (68) et une position fermée dans laquelle, en présence d'un tel objet (14, 16), lesdits mors (64, 66) coopèrent avec au moins une partie de l'objet (14, 16) occupant ladite position déterminée de référence, dans lequel les mors (64, 66) de ladite pince (42) de préhension comportent chacun un évidement (92) qui est ouvert radialement pour permettre le passage de mâchoires (26, 28, 37, 39) d'une pince (25, 35) de manipulation qui sont destinées à coopérer avec le goulot (44) de manière que lesdits mors (64, 66) de la pince (42) de préhension et lesdites mâchoires (26, 28, 37, 39) de la pince (25, 35) de manipulation sont susceptibles de s'interpénétrer sans interférence mécanique lors d'un transfert de l'objet (14, 16) de l'une à l'autre desdites pinces,
les mors (64, 66) de la pince (42) de préhension comportant chacun respectivement :
- une première partie (94) de serrage de chaque mors (64, 66) de la pince (42) de préhension présente une épaisseur (e) déterminée de manière que, en position fermée de la pince (42), l'effort de serrage exercé par ladite première partie (94) de chaque mors (64, 66) soit appliqué sur une zone, dite amorphe, du tronçon (60) de jonction qui est directement adjacente à la collerette (50), et
ladite première partie (94) de serrage qui, en position fermée de la pince (42) de préhension, coopère avec ladite au moins une partie de l'objet (14, 16) pour appliquer au tronçon (60) de jonction un effort radial de serrage propre à permettre de maintenir, dans le logement (68) de la pince (42) de préhension, l'objet (14, 16) occupant ladite position déterminée de référence, et
ladite la première partie (94) de serrage de chaque mors (64, 66) de la pince (42) de préhension comporte une face (98) de support qui, lorsque la pince (42) est en position fermée autour de l'objet (14, 16) occupant ladite position déterminée de référence, coopère avec une partie d'une face (62) d'appui de la collerette (50) radiale qui est adjacente au tronçon (60) de jonction,
- une deuxième partie (96) de blocage,
- ledit évidement (92), qui sépare axialement la première partie (94) de serrage et la deuxième partie (96) de blocage,
**caractérisé en ce que** la deuxième partie (96) de blocage de chaque mors (64, 66) de la pince (42) de préhension comporte au moins une face (102) de butée, qui en position fermée de la pince (42) de préhension, coopère sélectivement avec au moins une portion du buvant (46) du goulot (44) délimitant le pourtour de l'ouverture (48) pour former au moins une butée axial pour maintenir l'objet (14, 16) dans ladite position déterminée de référence, ladite face (102) de butée étant en contact permanent avec ladite portion du buvant (46) du goulot ou distante axialement de cette dernière d'un jeu "j" lorsque l'objet (14, 16) est dans ladite position déterminée de référence.

2. Ensemble selon la revendication 1, **caractérisé en ce que** la deuxième partie (96) de blocage est réalisée, venue de matière, en une seule pièce avec la première partie (94) de serrage de manière que chaque mors (64, 66) de la pince (42) de préhension constitue un sous-ensemble monobloc.

3. Ensemble selon l'une quelconque des revendications 1 à 2, **caractérisé en ce que** la deuxième partie (96) de blocage de chaque mors (64, 66) de la pince (42) de préhension est constituée par un bras (100) de blocage.

4. Ensemble selon la revendication 3, **caractérisé en ce que** les bras (100) de blocage comportent chacun une surface (104) tronconique qui, lors de la fermeture de la pince (42), est apte à coopérer avec le goulot (44) pour positionner l'objet (14, 16) dans ladite position déterminée de référence.

5. Ensemble selon l'une quelconque des revendications 1 à 4, **caractérisé en ce que** les mors de la pince (42) de préhension sont réalisés en polyetherethercétone.

6. Ensemble selon l'une quelconque des revendications 1 à 5, **caractérisé en ce que** ledit objet (14, 16) est une préforme chaude.

## Patentansprüche

1. Einheit, die aufweist:
einen Gegenstand (14, 16), wie eine Vorform oder einen Behälter (16), der einerseits einen Flaschenhals (44) in seiner endgültigen Form versehen mit einem eine Öffnung (48) begrenzenden Mündungsrand (46) und mit mindestens einem ringförmigen Kragen (50), der sich radial vorstehend erstreckt, und andererseits einen Hohlkörper (56) aufweist, der sich axial in entgegengesetzter Richtung zu derjenigen der Öffnung (48) des Flaschenhalses (44) von einem dem Kragen (50) benachbarten Verbindungsabschnitt (60) bis zu einem Boden (58) erstreckt, und
eine Vorrichtung (10) zur Übertragung von Gegenständen (14, 16), die mindestens eine Greifzange (42) aufweist, die mindestens eine erste Klemmbacke (64) und eine zweite Klemmbacke (66) aufweist, die zwischen sich eine Aufnahme (68) begrenzen, die einen Teil des Gegenstands (14, 16) aufnimmt, wobei die Greifzange (42) mindestens eine offene Stellung, in der ein Gegenstand (14, 16) zwischen den Klemmbacken (64, 66) entnommen oder zwischen sie eingeführt werden kann, um eine bestimmte Bezugsstellung in der Aufnahme (68) einzunehmen, und eine geschlossene Stellung einnehmen kann, in der in Gegenwart eines solchen Gegenstands (14, 16) die Klemmbacken (64, 66) mit mindestens einem Teil des die bestimmte Bezugsstellung einnehmenden Gegenstands (14, 16) zusammenwirken, wobei die Klemmbacken (64, 66) der Greifzange (42) je eine Aussparung (92) aufweisen, die radial offen ist, um den Durchgang von Backen (26, 28, 37, 39) einer Betätigungszange (25, 35) zu erlauben, die dazu bestimmt sind, mit dem Flaschenhals (44) so zusammenzuwirken, dass die Klemmbacken (64, 66) der Greifzange (42) und die Backen (26, 28, 37, 39) der Betätigungszange (25, 35) bei einer Übertragung des Gegenstands (14, 16) von einer der Zangen zur anderen ohne gegenseitige mechanische Störung ineinandergreifen können,
wobei die Klemmbacken (64, 66) der Greifzange (42) je aufweisen:
- einen ersten Spannteil (94) jeder Klemmbacke (64, 66) der Greifzange (42), der eine derart bestimmte Dicke (e) aufweist, dass in der geschlossenen Stellung der Zange (42) die vom ersten Teil (94) jeder Klemmbacke (64, 66) ausgeübte Spannkraft auf eine so genannte amorphe Zone des Verbindungsabschnitts (60) angewendet wird, die dem Kragen (50) direkt benachbart ist, und
der erste Spannteil (94), der in der geschlossenen Stellung der Greifzange (42) mit dem mindestens einen Teil des Gegenstands (14, 16) zusammenwirkt, um auf den Verbindungsabschnitt (60) eine radiale Spannkraft anzuwenden, die geeignet ist, den Halt des die bestimmte Bezugsstellung einnehmenden Gegenstands (14, 16) in der Aufnahme (68) der Greifzange (42) zu erlauben, und
der erste Spannteil (94) jeder Klemmbacke (64, 66) der Greifzange (42) eine Trägerseite (98) aufweist, die, wenn die Zange (42) in der um den die bestimmte Bezugsstellung einnehmenden Gegenstand (14, 16) geschlossenen Stellung ist, mit einem Teil einer Auflageseite (62) des radialen Kragens (50) zusammenwirkt, die dem Verbindungsabschnitt (60) benachbart ist,
- einen zweiten Blockierteil (96),
- die Aussparung (92), die den ersten Spannteil (94) und den zweiten Blockierteil (96) axial trennt,
**dadurch gekennzeichnet, dass** der zweite Blockierteil (96) jeder Klemmbacke (64, 66) der Greifzange (42) mindestens eine Anschlagseite (102) aufweist, die in der geschlossenen Stellung der Greifzange (42) selektiv mit mindestens einem Abschnitt des den Umfang der Öffnung (48) begrenzenden Mündungsrands (46) des Flaschenhalses (44) zusammenwirkt, um mindestens einen axialen Anschlag zu bilden, um den Gegenstand (14, 16) in der bestimmten Bezugsstellung zu halten, wobei die Anschlagseite (102) in permanentem Kontakt mit dem Abschnitt des Mündungsrands (46) des Flaschenhalses oder von diesem um ein Spiel "j" axial entfernt ist, wenn der Gegenstand (14, 16) in der bestimmten Bezugsstellung ist.

2. Einheit nach Anspruch 1, **dadurch gekennzeichnet, dass** der zweite Blockierteil (96) aus dem gleichen Material aus einem Stück mit dem ersten Spannteil (94) hergestellt wird, damit jede Klemmbacke (64, 66) der Greifzange (42) eine einstückige Teileinheit bildet.

3. Einheit nach einem der Ansprüche 1 bis 2, **dadurch gekennzeichnet, dass** der zweite Blockierteil (96) jeder Klemmbacke (64, 66) der Greifzange (42) aus einem Blockierarm (100) besteht.

4. Einheit nach Anspruch 3, **dadurch gekennzeichnet, dass** die Blockierarme (100) je eine kegelstumpfförmige Fläche (104) aufweisen, die beim Schließen der Zange (42) mit dem Flaschenhals (44) zusammenwirken kann, um den Gegenstand (14, 16) in der bestimmten Bezugsstellung zu positionieren.

5. Einheit nach einem der Ansprüche 1 bis 4, **dadurch gekennzeichnet, dass** die Klemmbacken der Greifzange (42) aus Polyetheretherketon hergestellt sind.

6. Einheit nach einem der Ansprüche 1 bis 5, **dadurch gekennzeichnet, dass** der Gegenstand (14, 16) eine warme Vorform ist.

## Claims

1. Assembly comprising:
an object (14, 16), such as a preform or a container (16), including on the one hand a neck (44) having its final shape provided with a rim (46) delimiting an opening (48) and at least one annular collar (50) projecting radially and on the other hand a hollow body (56) extending axially away from the opening (48) of the neck (44) from a junction section (60) adjacent the collar (50) to a bottom (58), and
a device (10) for transferring objects (14, 16) including at least one gripper (42) which includes at least a first jaw (64) and a second jaw (66) delimiting between them a housing (68) which receives a portion of said object (14, 16), the gripper (42) being adapted to occupy at least an open position in which an object (14, 16) can be extracted from between or inserted between the jaws (64, 66) to occupy a particular reference position in the housing (68) and a closed position in which, when such an object (14, 16) is present, said jaws (64, 66) cooperate with at least a portion of the object (14, 16) occupying said particular reference position, in which the jaws (64, 66) of said gripper (42) each include a recess (92) that is open radially to allow the passage of jaws (26, 28, 37, 39) of a manipulator clamp (25, 35) that are adapted to cooperate with the neck (44) so that said jaws (64, 66) of the gripper (42) and said jaws (26, 28, 37, 39) of the manipulator clamp (25, 35) are able to interpenetrate without mechanical interference upon transfer of the object (14, 16) from one to the other,
the jaws (64, 66) of the gripper (42) each including, respectively:
- a the first or clamping portion (94) of each jaw (64, 66) of the gripper (42) has a thickness (e) determined so that, in the closed position of the gripper (42), the clamping force exerted by said first portion (94) of each jaw (64, 66) is applied to a so-called amorphous area of the junction section (60) that is directly adjacent the collar (50), and
said first or clamping portion (94) which, in the closed position of the gripper (42), cooperates with said at least a portion of the object (14, 16) to apply to the junction section (60) a radial clamping force enabling retention of the object (14, 16) occupying said particular reference position in the housing (68) of the gripper (42), and
said first or clamping portion (94) of each jaw (64, 66) of the gripper (42) includes a support face (98) which, when the gripper (42) is closed around the object (14, 16) occupying said particular reference position, cooperates with a portion of a bearing face (62) of the radial collar (50) that is adjacent the junction section (60),
- a second or locking portion (96),
- said recess (92), which separates the first or clamping portion (94) and the second or locking portion (96),
**characterized in that** the second or locking portion (96) of each jaw (64, 66) of the gripper (42) includes at least one abutment face (102) which, in the closed position of the gripper (42), cooperates selectively with at least a portion of the rim (46) of the neck (44) delimiting the perimeter of the opening (48) to form at least one axial abutment to hold said object (14, 16) in said particular reference position, said abutment face (102) being in permanent contact with said portion of the rim (46) of the neck or spaced axially from the latter by a clearance "j" when the object (14, 16) is in said particular reference position.

2. Assembly according to Claim 1, **characterized in that** the second or locking portion (96) is produced in one piece with the first or clamping portion (94) so that each jaw (64, 66) of the gripper (42) constitutes a one-piece subassembly.

3. Assembly according to either one of Claims 1 and 2, **characterized in that** the second or locking portion (96) of each jaw (64, 66) of the gripper (42) consists of a locking arm (100).

4. Assembly according to Claim 3, **characterized in that** the locking arms (100) each include a frustoconical surface (104) which is adapted on closing the gripper (42) to cooperate with the neck (44) to position the object (14, 16) in said particular reference position.

5. Assembly according to any one of Claims 1 to 4, **characterized in that** the jaws of the gripper (42) are made of polyetheretherketone.

6. Assembly according to any one of Claims 1 to 5, **characterized in that** said object (14, 16) is a hot preform.
